# EUROPEAN PATENT APPLICATION

(11) **EP 4 485 222 A1**
(43) Date of publication of application: **01.01.2025**
(21) Application number: 23182581.1
(22) Date of filing: 30.06.2023
(51) Int. Cl.: G06F 16/21, G06F 16/25

(54) **INTELLIGENT GUIDANCE FOR MAPPING ASSETS IN A KNOWLEDGE GRAPH**

(71) Applicant: Siemens Aktiengesellschaft, 80333 München (DE)
(72) Inventor: Carroll, Patrick, 76131 Karlsruhe (DE); Daniel, Donny Thomas, 85567 Grafing b. München (DE); Strnad, Oliver, 76771 Hördt (DE)
(74) Representative: Siemens Patent Attorneys

(57) **Abstract**

What is proposed is a system (100) and a respective method (300) for intelligent guidance for mapping data associated with a device. The system is comprising:
- an interface (101) to receive device related input data (DDAT) from at least one data source (105, 105a, 105b),
- a pattern extraction module (130) configured to detect and extract device information comprising parameters, signals and/or metadata from the input data, and configured to generate a list (L) in the form of key-value-pairs based on the extracted device information,
- a suggestion engine module (140) configured to generate mapping suggestions (MS) using heuristics on a corpus database (150) of already known mappings and/or using a semantic information model (160),
the suggestion engine module (140) further being configured to calculate similarity scores of a current mapping suggestion in comparison to the ones from the corpus database (150) or the semantic information model (160) and,
- a user interface (121), guiding a user to choose the best fitting mapping suggestion by showing the scored mapping suggestions based on a ranking on an input interface for a user, to input the best fitting mappings to be transferred to a persistent storage (200) and back to the corpus database (150) of already known mappings.

## Description

The present disclosure relates to a system and method for intelligent guidance for mapping data associated with a device. Furthermore, the present disclosure is directed to a respective computer program product.

In the environment of process industry or factory automation, software solutions to access, contextualize and semantically enrich data coming from different sources are often used to manage industrial assets of a technical plant more efficiently, reduce costs, and improve reliability and sustainability. Such software solutions mostly correspond to platforms or ecosystems like a suite of tools and applications that provide a comprehensive view of the assets of a technical plant. Often, they are based on the Industrial Internet of Things (IIoT) and use means to collect data and analytics and machine learning to analyze data from various sources.

Commonly the data are collected from different sources such as sensors, databases, spreadsheets, and other software applications. Then, the data are normalized to convert data from various sources into a standardized format. Normalization ensures that data is consistent, accurate, and usable for analysis and reporting. After that the normalized data need to be mapped to a common data model, which provides a unified view of the asset information. Data mapping involves matching data elements from different sources to the corresponding fields of a platform.

In process industry or factory automation field parameters and signal data from heterogeneous industrial devices such as field devices need to be mapped, which is a prerequisite for running analytics algorithms on the received industrial information. Industrial devices are highly heterogeneous in the way the model internal data, but often share common concepts under different names. Broad analysis of the health and function of an industrial production site can only be achieved if analysts can compare data across devices regardless of the internal data modelling of the devices.

Conventionally the mappings between different data models are created manually by an expert of the respective domain. Manual mapping effort is high, takes significant expertise and is very time consuming. Often a tool like BiZTalk server is used to integrate the device data into the analytics software solutions. However, those tools allow a user to explicitly code the specific data transformation. Thus, a computing infrastructure is provided but no intelligence or suggestions are mode.

Therefore, there is a requirement to reduce the effort of manual mapping and reduce the need for significant expertise or prior knowledge of specific device data models when mapping parameters/signals from heterogenous devices into a common vocabulary.

An objective of the present invention is to facilitate and automate the mapping process by intelligently guiding a user to easily find the right mappings for device related input data of a plurality of assets of an industrial plant.

This objective is achieved by a system for intelligent guidance for mapping data associated with a device according to claim 1. Furthermore, the problem is solved by a respective method according to claim 6 and a respective computer program product according to claim 10. Advantageous aspects of the invention are the subject of the dependent claims.

According to the invention, a system for intelligent guidance for mapping data associated with a device comprises an interface to receive device related input data from at least one data source, a pattern extraction module, a suggestion engine module and a user interface to perform the mapping by accepting or declining the mapping suggestions. The pattern extraction module is configured to detect and extract device information comprising parameters, signals and/or metadata from the input data and to generate a list in the form of key-value-pairs based on the extracted device information. The suggestion engine module is configured to generate mapping suggestions using heuristics on a corpus database of already known mappings and/or using a semantic information model. The suggestion engine module is further configured to calculate similarity scores of a current mapping suggestion in comparison to the ones from the corpus database or the semantic information model. The system further comprises a user interface guiding a user to choose the best fitting mapping suggestion by showing the scored mapping suggestions based on a ranking on an input interface for a user, to input the best fitting mappings to be transferred to a persistent storage and back to the corpus database of already known mappings.

The inventive system advantageously represents a technical tool, that guides a user intelligently and user-friendly through the mapping process of device data. Mapping suggestions of device data are presented to the user as a list ranked by similarity scores in a mapping UI, and the user chooses the preferred candidate. The selected candidates are then used to extend the mapping database and to create a mapping knowledge base which will be transferred to a persistent storing like for example a knowledge tree. Therefore, not only the effort, but also the expertise required to perform mappings, is significantly reduced. At the same time the efficiency of the formerly manual mappings is highly increased.

There is a continued human-machine interaction since the suggestion engine not only suggests mappings but also evaluates the mapping suggestions by calculating scores for the mapping suggestions. Thus, the user may interactively select a mapping suggestion based on the presented ranking. The system facilitates the decision of the user and by selecting the best mapping, the user gives feedback to the system which learns continuously to improve its functionality. By improving the mapping process of device data, analysts are enabled to better compare data across devices regardless of the internal data modelling of the devices. Consequently, the analysis of health and functionalities of different devices can be improved leading to a better and more efficient performance of a technical plant. Finally, a better mapping will lead to an optimization of the process run in the technical plant. The data from the knowledge tree (or the persistent storage) may be incorporated into a diagnostic tool of an automation software of a process plant or a factory automation plant finally optimizing the plant operation. They also may be used for generating training data for machine learning models which might allow a better control or operation of a technical plant.

In very advantageous embodiments the device related input data are related to a physical real device or/and a virtual device as digital representation being provided by a digital twin of a device. Since a digital twin is a virtual representation of a physical object like a device, it can include the full product life cycle, such as design, manufacturing, operation and service phases. When the system as claimed herein is applied to a virtual device the mapping suggestions can be used to improve data analytics on the real and or virtual device data. Thus, the mapping will have a positive impact on what would happen if changes were made in the real world.

In another advantageous embodiment, the detection module further comprises a configuration module adapted to select a semantic information model. By choosing a suitable, for each use case adopted semantic information model, the mapping process and the guidance of the user therein can be improved.

Another advantage of the inventive system or method is that in one embodiment the user can enter his or her own mapping suggestion. This results in a high flexibility as to the mapping process and it helps to improve the self-learning feature of the guidance system or method.

Features of examples of the present disclosure will become apparent by reference to the following description of an exemplary embodiment of the invention.

Thus, the invention is explained below using examples with reference to the figures, in which:
- Figure 1: shows an exemplary embodiment of a deployment of the inventive system.
- Figure 2: illustrates a system in accordance with an exemplary embodiment of the present disclosure.
- Figure 3: illustrates a flow chart of a method for intelligent guidance for mapping data associated with a device in accordance with an exemplary embodiment of the present disclosure.
- Figure 4: shows an example of a graphical user interface in accordance with an exemplary embodiment of the present disclosure.

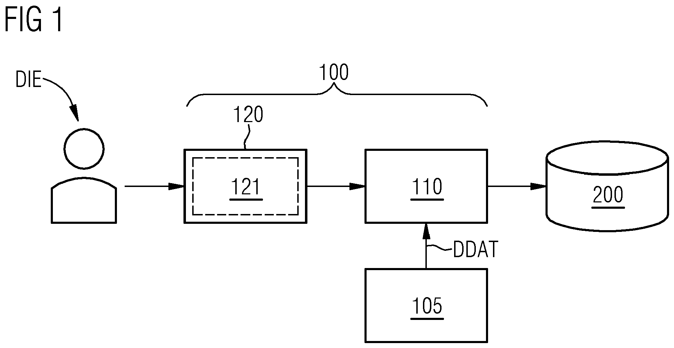

Figure 1 shows an exemplary embodiment of a deployment of the inventive system. The block diagram illustrates an embodiment of an inventive system 100 comprising a detection unit 110, which could be implemented for example as an application server or an application software running on a respective server, and a client unit 120 with a graphical user interface (GUI) 121. In this embodiment the system 100 is communicatively connected to a data acquisition unit 105, which retrieves the input device data DDAT for the detection unit and a persistent storage unit 200 such as a knowledge base. Communication between the units includes, but is not limited to, the exchange of data and information. The client 120 could be implemented as computing device, as display device or as software requesting information to access a service made available by a server which hosts at least the detection unit 110. The client 120 may have respective components to display information or data on the GUI 121 as output. At the same time, the GUI 121 allows the user DIE to interact with the inventive system 100 through graphical icons or command-line interfaces as text windows by using for example a keyboard or similar device for data or information input. Thus, the GUI 121 may be configured to receive queries from a user such as a data integration engineer DIE as input and to show the results of the device data mapping as output.

However, it should be stated at this point that the graphical user interface is only one example. In general, a user interface is needed to perform the mapping. This can be a graphical user interface as described above, but it also can be another computer receiving the mapping suggestions or data from the server 110. An application programmable interface (API) is also possible. Each computer-implemented means allowing a decision making can be implemented.

The system 100 may be intended for implementation in an asset monitoring or asset analyzation system, a data warehouse context or software ecosystem to support a larger software application in the environment of process industry or factory automation in a software implementation, the inventive system can be implemented as a standalone program or as an integrated component within the context of a larger functional enterprise application. The software for implementing the inventive system can be installed, compiled, and executed in a variety of devices including personal computers, servers with various operating systems, portable computing devices, or other software computing implementation means not mentioned herein. Furthermore, the inventive system may be deployed as Software as a service (SaaS). A SaaS is software that is owned, delivered and managed remotely by one or more providers. The provider delivers software based on one set of common code and data definitions that is consumed in a one-to-many model by all contracted customers at any time on a pay-for-use basis or as a subscription based on use metrics.

There may be several deployment modes for the system depending on the use case. A deployment of the system on a cloud network is advantageous if an on-demand availability of data, storage and general computing resources are required, with functions distributed over multiple cloud server locations. A deployment of the system to an edge may be an optimal scenario when data processing is required close to a technical plant.

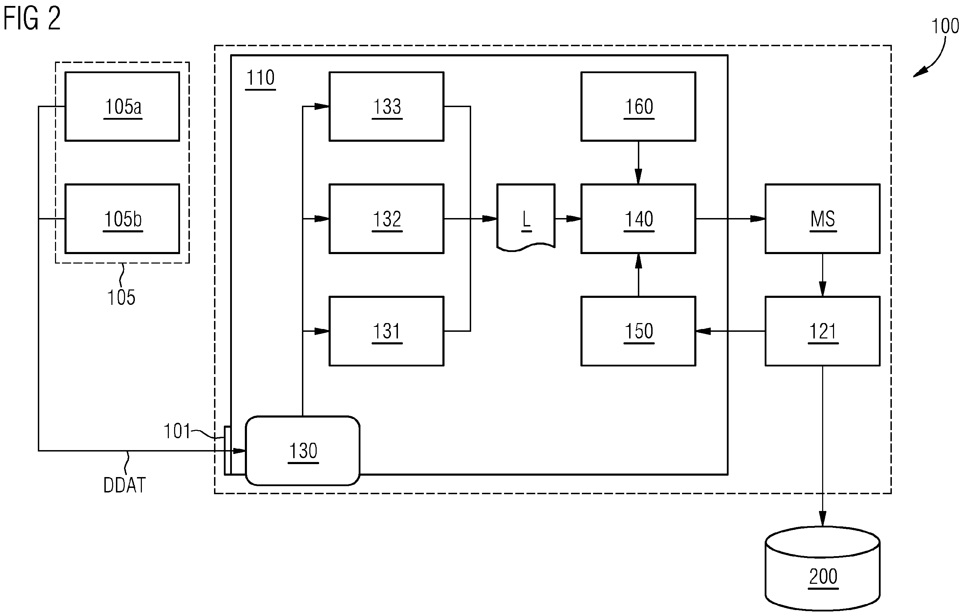

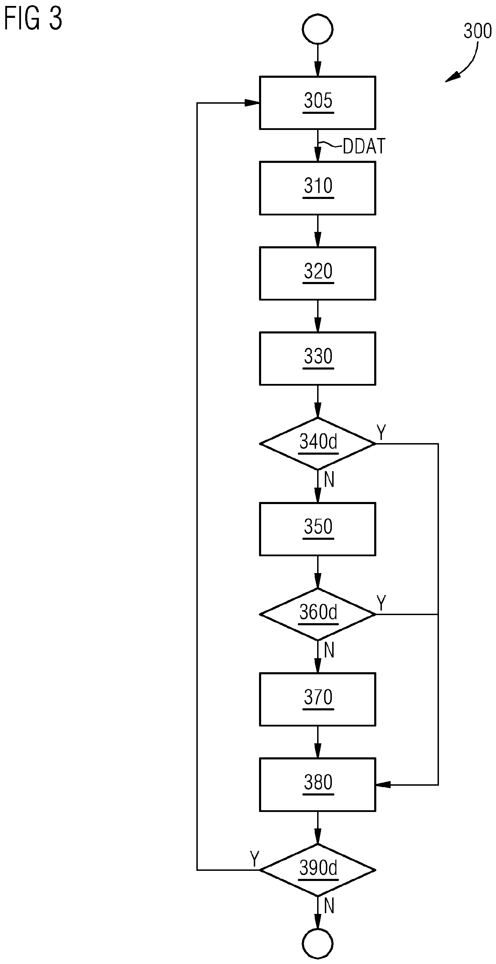

Figure 2 illustrates a system 100 in accordance with an exemplary embodiment of the present disclosure. The objective of the present patent application is also achieved by a computer-implemented method for intelligent guidance for mapping data associated with a device. A flowchart of the inventive method 300 in accordance with an exemplary embodiment of the present disclosure is shown in Fig. 3. The steps of the method shown in the flowchart are incorporated into the following disclosure of the system:
The system 100 in this embodiment comprises preferably several software modules but is not limited to the shown implementation and design, since all functions of the modules may be implemented in an equivalent way within one module or within a setting with a plurality of modules. The detection unit 110 comprises at least one interface 101 to at least one data acquisition unit 105. In accordance with the disclosure of Fig. 2 step 305 of Fig. 3 comprises the acquisition of data from at least one data source 105a or 105b.

The data acquisition unit 105 may be connected with or comprise a database or historian as data source. Other data sources may be data warehouses or any repository or storage of device data, which may serve as input data to the mapping system. In this case the system 100 requests the data from an historian either continuously or at a time-to-time basis. In one preferred embodiment the device data are retrieved from one or more process device managers 105a like for example a SIMATIC PDM (Process Device Manager), which is a universal, manufacturer-independent tool for the configuration, parameter assignment, commissioning, diagnostics and maintenance of intelligent field devices (sensors and actuators) and field components (remote I/Os, multiplexers, control room devices, compact controllers), which will be referred to simply as devices. In this case the PDM might send input data to the system 100 in the form of xml files on a time-to-time basis (for example every 2 to 3 hours depending on the use case).

Alternatively, device data may be retrieved from any data sources 105b delivering device related or device specific data in all kinds of formats, languages or protocols (e.g. xml, json, csv, http, html...). The data contained in a data source are provided with a time stamp and represent all kinds of properties of a device at that time stamp, like the temperature of a motor, the number of operation hours of a device, the vibration frequency of a turbine or the related spectrum. Thus, the provided data DDAT should be preferably correspond to a list or table structure containing data objects representing all kinds of properties of a device at a time stamp t reaching from a simple value up to a text or graphics out of the context of the device. It is noted that in this disclosure the term "device" does not only stand for a physical device, but also includes virtual devices. A virtual device may be any computer implemented entity with signals like measurement values, parameters or any metadata like descriptive data. A virtual device may be part or created by a digital twin of a plant. At the same time there may exist a digital representation of a device itself. A virtual device may also be described by a semantic data or information model like a physical device. For a user of the mapping system it actually doesn't matter whether the device data to be mapped stem from a physical or virtual device.

The first step in a mapping procedure is to explore the structure of the input data associated with device data DDAT which are acquired by different data sources 105a and/or 105b via the interface 101. The data interface 101 can be programmable or readily configured to ingest the input data to the detection unit 110. There, the input data are firstly fed to a pattern extraction module 130. The pattern extraction module 130 is configured to detect and extract device information comprising parameters, signals and/or metadata from the input data DDAT (Step 310 in Fig. 3). In the following the term "device information" shall refer to the information comprising parameters, signals and/or metadata of a field device. In the embodiment shown in Fig. 2 there are three modules (131, 132 and 133) shown to detect and extract the needed device information. All those modules are used to generate candidates for suggestions for mappings regarding parameters, signals or metadata of the device data DDAT. The following approaches may be used to detect and extract the relevant information.

In a first approach, one of the detection modules 131, 132 or 133 might be configured to search in the input data for occurrences of well-known identifiers (=name of data objects) for parameters/signals or metadata fields by using device family and / or protocol knowledge (models) of HART, PROFIBUS or other device communication types. Mostly device information is integrated directly in software components like process automation software through a device description (e.g. EDD / Firmware). Companies reuse common software building blocks when developing these. This leads to a set of well-known identifiers shared by all devices of one device family of a manufacturer. Another example would be, that a device is connected via PROFIBUS. In this case, since the PROFIBUS interface is known (e.g. via PROFIBUS Application Profiles), more information about the device can be extracted by detecting well-known identifiers from an Application Profile. If identifiers of a device manufacturer for example are detected, the detection module attempts to find a linked value which is defined by the same identifier. This identifier will then be used as key in a key-value pair which is used as basis for the mapping.

A second approach is based on databases in which common structural patterns for key-values and timeseries data are described. Thus, one of the detection modules 131, 132 or 133 might be configured to use such databases or models of common structural representations of data to detect if patterns appear with respect to the source data. A pattern in the xml format might be for example a data sequence like <*> <name> xxx </name>; <value>...</value> </> within the measurement data of a database. If patterns can be matched, a unique identifier can be derived and used as key in key-value pairs.

In a third approach, one of the detection modules 131, 132 or 133 might be configured to present an abstract representation of the source data hierarchal structure like a database in which structural patterns for key-values and timeseries data are described. A user can select with mouse click/drag certain recurring sub elements of data or data sequences and flag them as data extraction templates. A data extraction template will be configured with what the parameter/signal/metadata name is, and where to search for the values, with optional data like unit, etc. This approach is advantageous if, in contrast to the second approach, no patterns are known yet.

After the extraction and detection is done, the system 100 has generated a list L of device information in the form of key-value pairs (Step 320 in Fig. 3) A key in the following disclosure corresponds to a unique identifier for a property of a device in relation to the extracted device information. It can be implemented in any data object format. An example for a key would be "A31". In this example the key "A31" may be a device-internal identifier for an operating hours counter. In the list L the key "A31" is assigned to the value "50h". The assigned value doesn't necessarily need to be a value in the physical or mathematical way. In this disclosure the term value stands also for data which is represented as a matrix, a graph or any tabular data format.

The key-value pairs are then fed into a suggestion engine 140. The suggestion engine module 140 is configured to generate a mapping between the elements of the list L and elements of a semantic information model 160 using heuristics on a corpus database 150. This means that the suggestion engine looks in a first step (step 330 in Fig. 3) whether the current key fits to a key of already existing mappings from a database of pre-existing mappings, which is referred to as corpus of already known mappings 150. The initial set of mappings of the corpus database is provided together with the system and may be created with experts upfront as a bootstrapping mechanism. Additionally, the suggestion 140 engine calculates a probability value whether the current key fits to one of the keys of the corpus. In the above described example, the result might be, that B31 means "operating hours" with a probability of 70%. Thus, heuristics are used to derive a suggestion. It's an analytical approach in which limited knowledge about a system is used to make statements about the system using conjectural inferences. The used heuristics include, but are not limited to, using a similarity score between the current key and the element of the corpus database, which is calculated by using similarity algorithms like BERT, Jaro-Winkler, et.al. Additional scoring metrics can also be integrated such as checking data type for the values of the key value pair under consideration, checking string length, checking units when available, etc. This finally leads to the output of the scored mapping suggestions MS.

In one embodiment of the invention only those mappings with the highest similarity scores are presented to the user as a list ranked by similarity in the mapping user interface 121 and the user chooses the preferred candidate (Step 340d in Fig. 3). This might lead to results even if the similarity scores are quite low. In another embodiment a certain similarity score (as upper limit) would be specified in advance either by a user or an algorithm. In this case only suggestions with scores above this certain value would be displayed. In this case the user could configure which similarity values shall be determined.

If the user agrees with the mapping suggestion (output Y of decision 340d in Fig. 3) the mapped data pair is transferred to a persistent storage like a knowledge base 200. The selected candidates are then used to extend the mapping database of the corpus database 150 and to create a mapping which will be transferred to the knowledge base 200 (step 380 in Fig. 3).

If the user declines and doesn't agree with the suggestion of the suggestion engine (output N of decision 340d in Fig. 3), the current key element of the list L under consideration is compared to a key element out of a semantic information model 160 (Step 350 in Fig. 3). If the semantic information model 160 is applied, a similarity score between the current key and the element of the semantic information model database is calculated by using the same similarity algorithms as mentioned above.

A semantic information model 160 comprises a mostly hierarchical data structure or data model representing all information in the context of a device and contains a collection of properties describing the device. There are industry standard semantic information models like PA-DIM (Process Automation Device Information Model). Alternatively, such models can be configured on an individual basis. An example for such a model for the device "pump" would include all kinds of properties and connections in the context of a pump like rotation speed, control unit, pumping capacity, communication interface, wiring and so on.

If the user agrees with the mapping suggestion MS which is based on the semantic information model (output Y of decision 360d in Fig. 3) the mapped data pair is transferred to the persistent storage 200. At the same time the selected candidate is used to extend the corpus of already known mappings 150 (step 380 in Fig. 3).

If the user declines and doesn't agree with the suggestion of the suggestion engine (output N of decision 360d in Fig. 3), the user may enter a mapping suggestion MS for the key identifier manually. The latter may then be used to extend either the corpus of existing mappings and the mapped data pair is transferred to the persistent storage 200 (step 380 in Fig. 3). In the decision box 390d in Fig. 3 the user may decide whether to continue with the mapping process. In case of Y a next request will be entered (output Y of decision 390d in Fig. 3). Otherwise, the mapping process is stopped (output N of decision 390d in Fig. 3).

This way the inventive system may preferably continue to learn from new queries during continued use. Therefore, feedback is obtained from the user and a self-learning system is installed to guide a user continuously through the mapping process. The system is improving its performance the more input is obtained by a user.

In a preferred embodiment, the mapping system may also be used as a labelling tool. The obtained mapped sematic identifier may be used as data labels for the values which are assigned to the keys of the key-value-pairs. Labeling data for analytics and machine learning can be a long and expensive process. Using the semi-automatic mapping procedure presented in this procedure can support data science and machine learning teams to facilitate the labelling process and to turn unstructured device data from multiple sources into artificial intelligence-ready training data.

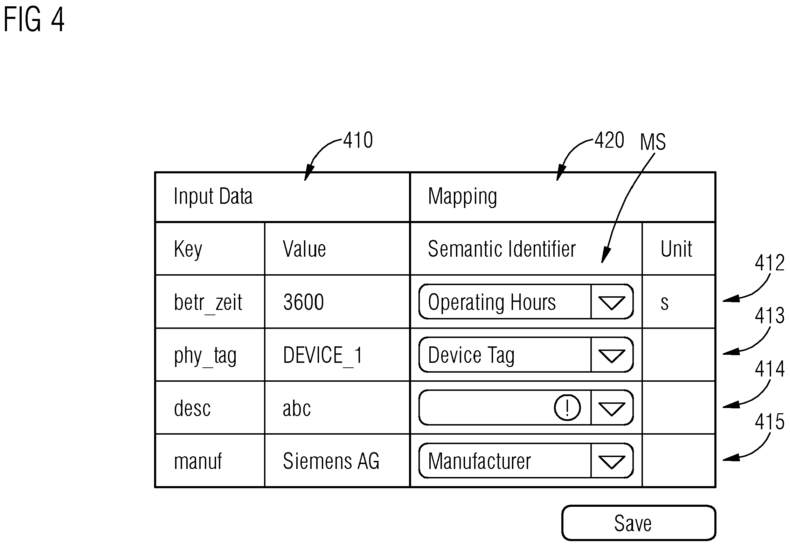

Figure 4 shows an example of a graphical user interface in accordance with an exemplary embodiment of the present disclosure. The example shows how a user can be guided by the suggestion engine as described above to derive the most probable mappings of data associated with a device. The GUI in this example comprises a mapping user interface in the form of a table. The columns on the left side of the table show the input data 410 in the form of key-value pairs, which are fed to the suggestion engine. The columns on the right side of the table show the output data 420, which are delivered by the suggestion engine. The mapping suggestions MS are shown in the column named "Semantic Identifier". In row 412, an example is shown, where the mapping was derived with the help of the corpus database, which is the database of already known mappings. The key "betr_zeit" is mapped automatically (by applying the inventive method which is deployed in system 100) to the semantic identifier "operating hours". However, the user can take a corrective action and choose another mapping which is offered in the menu - if necessary.

In row 414, the system could not provide any mapping suggestion to the user. Therefore, the dropdown is empty, and the small exclamation mark indicates that the user gets the chance to manually select the semantic identifier. The entries that are offered in the dropdown menu are firmly defined by the semantic information model 160, which could be for example a library with vocabulary for the description of pumps. The entries in the dropdown are not the selection from the corpus database. The corpus database contains only already known mappings between "key" and "semantic identifier" from the past.

Entries showing the mapping probability of the shown entries of the dropdown menu might be an option to improve guidance of the user. The mapping probability could be shown implicitly by a ranking of the entries showing the mapping with the highest probability first.

Thus, the invention provides a logic for detecting parameters, signals and/or metadata of devices and finally produces suggestions on how the received device information relates to common semantic information model for devices. Once the user (which might be a person or another computer or algorithm/software) accepts a suggestion, the new mapping is persisted in a storage and will be integrated into future mapping suggestions. When a mapping is completed for a device, subsequent data of the same device can be automatically transformed and ingested into a corpus of known mappings with no further effort from the data integration engineer.

## Claims

1. A system (100) for intelligent guidance for mapping data associated with a device,
the system (100) comprising
- an interface (101) to receive device related input data (DDAT) from at least one data source (105, 105a, 105b),
- a pattern extraction module (130) configured to detect and extract device information comprising parameters, signals and/or metadata from the input data, and configured to generate a list (L) in the form of key-value-pairs based on the extracted device information,
- a suggestion engine module (140) configured to generate mapping suggestions (MS) using heuristics on a corpus database (150) of already known mappings and/or using a semantic information model (160),
the suggestion engine module (140) further being configured to calculate similarity scores of a current mapping suggestion in comparison to the ones from the corpus database (150) or the semantic information model (160) and,
- a user interface (121), guiding a user to choose the best fitting mapping suggestion by showing the scored mapping suggestions based on a ranking on an input interface for a user, to input the best fitting mappings to be transferred to a persistent storage (200) and back to the corpus database (150) of already known mappings.

2. The system of claim 1, wherein the device related input data are related to a physical device or/and a virtual device as digital representation being provided by a digital twin of a device.

3. The system of claim 1 or 2, wherein the detection module further comprises a configuration module adapted to select a semantic information model.

4. The system of claim 1, 2 or 3, wherein the detection module further comprises a configuration module further adapted to select a deployment mode for the system to be selected from any one of the following: deployment of the system on a cloud network or deployment of the system to an edge.

5. The system of any of the preceding claims, wherein the user interface (121) is configured that the user can input his/her own mapping suggestion (MS) to be transferred to a persistent storage (200) and back to the corpus database (150) of already known mappings.

6. A computer implemented method for intelligent guidance for mapping data associated with a device,
the method comprising the following steps
- receiving (305) device related input data from at least one data source (105, 105a, 105b),
- detecting and extracting patterns (310) from the received device information comprising parameters, signals and/or metadata from the input data,
- generating (320) a list (L) in the form of key-value-pairs based on the extracted device information,
- generating (330) mapping suggestions (MS) using heuristics on a corpus database (150) of already known mappings and/or using a semantic information model (160), and calculating similarity scores of a current mapping suggestion in comparison to the ones from the corpus database (150) or the semantic information model (160) and,
- guiding a user (340d, 360d) by presenting the scored mapping suggestions based on a ranking to the user to choose the best fitting mappings to be transferred to a persistent storage (200) and back to the corpus database (150) of already known mappings.

7. The method of claim 6, wherein the user can input his/her own mapping suggestion (MS) to be transferred to a persistent storage (200) and back to the corpus database (150) of already known mappings.

8. The method of claim 6 or 7, wherein the device related input data are related to a physical device or/and a virtual device as digital representation being provided by a digital twin of a device.

9. The method of any of the claims 6 to 8, wherein the semantic information model can be selected.

10. A computer program product comprising instructions that, when loaded into a memory of a computing device and executed by at least one processor of the computing device, execute the method steps of the computer implemented method according to any one of the claims 6 to 9.

11. Use of a system (100) according to any of the claims 1 to 5 as semi-automated labeling tool to generate training data for an artificial intelligence model.
